# EUROPEAN PATENT APPLICATION

(11) **EP 4 597 833 A1**
(43) Date of publication of application: **06.08.2025**
(21) Application number: 24154553.2
(22) Date of filing: 30.01.2024
(51) Int. Cl.: H02S 20/30, F24S 30/425

(54) **A SOLAR RACKING SYSTEM**

(71) Applicant: Jing-Xin Solar Ltd., Tainan City 709029 (TW)
(72) Inventor: YANG, Ching-Lung, 709029 Tainan City (TW)
(74) Representative: Straus, Alexander

(57) **Abstract**

A solar racking system, which is capable of adjusting the angle of solar panels for solar tracking. The solar racking system comprises a pier, a movable frame, a positioning seat, and a linear actuator. The movable frame is pivotally mounted on the pier with a crossbar as an axis, and the positioning seat is fixed to the crossbar at a first end of the positioning seat. One end of the linear actuator is attached to the pier and the other end of the linear actuator is attached to a second end of the positioning seat. When the linear actuator is operated, the movable frame pivots relative to the pier. The design of the solar racking system is simple, stable, and allows for angle adjustments of the solar panels to enhance energy conversion efficiency.

## Description

### FIELD OF INVENTION

This application relates to a solar racking system, in particular a movable solar racking system, which allows for adjustment of the angle and sun-tracking functions.

### BACKGROUND OF THE INVENTION

A solar panel is a crucial element in solar power generation systems, designed to convert solar radiation into electricity. Conventional solar panels are usually set at fixed angles and lack the ability to adjust their angles with changes in the sun's varying position. In order to enhance energy conversion efficiency, tracking solar panels have been developed. These panels possess the ability to dynamically adjust their angles in response to the sun's movement, maximizing solar capture and augmenting energy conversion efficiency.

Nevertheless, tracking solar panels face several challenges. First, their comparatively complex structure results in higher design and manufacturing costs. These panels require special mechanisms and control systems to adjust the angle, which increases the cost and technical requirements. Second, the stability of tracking solar panels can be a concern. Due to their moving structure, tracking solar panels may not be stable enough when exposed to wind and other external forces. This vulnerability can lead to damage or reduced performance, requiring additional structural support and protection.

In conclusion, conventional solar panels lack the ability to adjust their angles based on the position of the sun, giving rise to tracking solar panels. Yet, resolving the complex structure and stability concerns associated with tracking solar panels is imperative. Consequently, the exploration of a simplified and stable tracking solar panel holds substantial research significance and promising practical applications.

### SUMMARY OF THE INVENTION

The main purpose of the present disclosure is to provide a solar racking system. According to one aspect of the present disclosure, the solar racking system can pivot relative to a pier base, enabling solar tracking and thereby increasing power generation efficiency. According to another aspect of the present disclosure, the solar racking system utilizes a simplified structure with good stability.

More specifically, the present disclosure provides a solar racking system comprising: a pier; a movable frame (200) including a crossbar, the movable frame (200) being pivotally mounted on the pier using the crossbar as an axis; a reinforced bracket assembly spanning the crossbar and mounted to the crossbar with two fixed ends fixed to a back side of the movable frame (200); a positioning seat having a first end and a second end and fixed to the crossbar at the first end; and a linear actuator pivotally connected at one end to the pier and at the other end to the second end of the positioning seat; wherein when the linear actuator is operated, the movable frame (200) pivots relative to the pier.

Preferably, the second end of the positioning seat can be fixed to the movable frame (200), allowing the positioning seat to drive the movable frame (200) to pivot relative to the pier when the linear actuator operates.

Preferably, the crossbar is a polygonal cylinder, and the first end of the positioning seat is shaped to match the crossbar, thereby providing a more secure connection between the crossbar and the positioning seat.

Preferably, the pier, the positioning seat, and the linear actuator are coplanar, thereby providing stable uniaxial sun tracking for the solar racking system.

Preferably, the two sides of the movable frame (200) are defined as the back side and a front side, wherein the crossbar, the pier, the positioning seat, and the linear actuator are all located on the back side, and the solar panels are mounted on the front side so as not to interfere with the power generation efficiency of the solar panels.

Preferably, between the two fixed ends of the reinforced bracket assembly, a reinforcing component spans and is attached to the crossbar, with the end of the reinforcing component being fixed to the movable frame (200); and a portion of the two fixed ends contacts and is fixed to the movable frame (200), with the end of the two fixed ends being bent away from the movable frame (200).

Preferably, the pier has a first length, the positioning seat has a second length, and the linear actuator has a third length; wherein the sum of any two of the first length, the second length, and the third length is greater than the remaining one.

Preferably, the pier includes a bearing, and the crossbar passes through the bearing to allow the movable frame (200) to pivot relative to the pier.

Preferably, the linear actuator comprises a motor and an extension member. When the linear actuator is operated, the motor drives the extension member to extend or retract in one direction so that the length of the two ends of the linear actuator can extend or retract.

### BRIEF DESCRIPTION OF THE DRAWINGS

FIG. 1 is a three-dimensional schematic diagram of the solar racking system according to an embodiment disclosed herein.
FIG. 2 is a side view of the solar racking system according to an embodiment disclosed herein.
FIG. 3 is another side view of the solar racking system according to an embodiment disclosed herein.

### DETAILED DESCRIPTION OF THE PREFERRED EMBODIMENTS

Firstly, the Applicant wishes like to express that throughout the specification, including the present embodiments and the claims in the subsequent patent application, directional terms are based on the directions in the drawings. Secondly, in the following introduced embodiments and drawings, the same reference numbers represent the same or similar components or structural features.

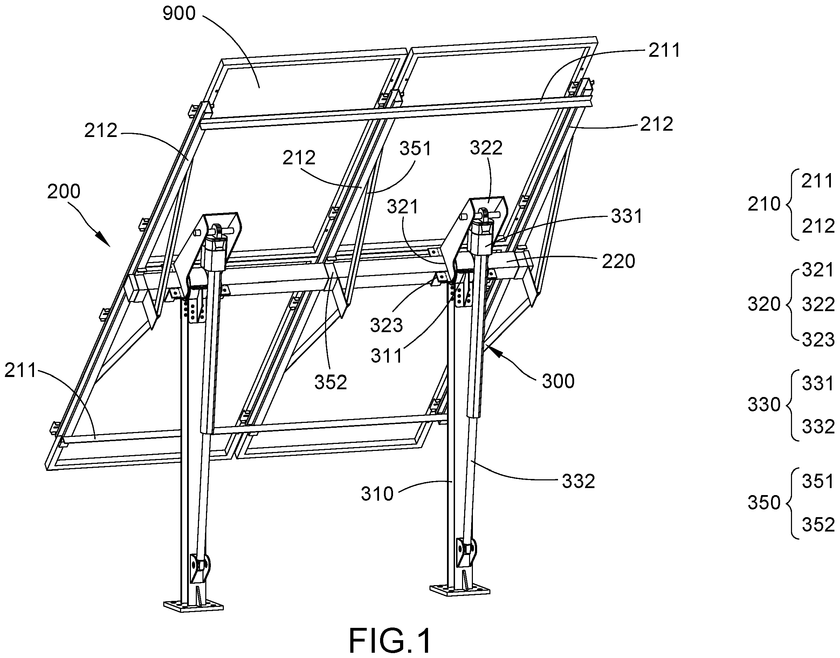

Referring to FIG. 1, which is a three-dimensional schematic diagram of an embodiment based on the disclosure for a solar racking system. The solar racking system comprises a movable frame (200) 200 and at least one support assembly 300.

The movable frame (200) 200 includes an outer frame 210 and a crossbar 220, wherein the outer frame 210 is used to secure solar panels 900. In this embodiment, the outer frame 210 is an overall rectangular frame structure, composed of two horizontal bars 211 and three vertical bars 212 that are crossed and fixed, with the distances between the two horizontal bars 211 and the three vertical bars 212 being uniform. However, it is important to note that this concept is not limited, those skilled in the art may change the configuration of the horizontal bars 211 and the vertical bars 212 in the outer frame 210 according to actual needs, as long as it allows the solar panels 900 to be fixed in place, which shall fall within the scope of the outer frame 210 of this concept. In this embodiment, the horizontal bars 211 and the vertical bars 212 are fixed in a locked manner, but this concept is not limited thereto, and welding can also be used for fixing.

The crossbar 220 is fixed between the two horizontal bars 211, the distance of the crossbar 220 to the both sides of the two horizontal bars 211 is consistent, and the crossbar 20 is locked to the three vertical bars 212. However, it is important to note that this concept is not limited, the crossbar 220 can also be fixed to the three vertical bars 212 by welding. In this embodiment, the solar panels 900 are locked to the vertical bars 212.

The solar racking system is set up through at least one support assembly 300. In this embodiment, there are two support assemblies 300 for the solar racking system. However, it is important to note that this concept is not limited, the minimum number of the support assemblies 300 can be one and can be placed at the center position of the crossbar 220. The number of the support assemblies 300 can also be changed and adjusted according to the usage requirements, as long as the support assemblies 300 are evenly disposed on the crossbar 220, making the outer frame 210 stable as a whole and allowing the outer frame 210 to pivot relative to the support assembly 300 with the crossbar 220 as an axis, which is within the scope of this concept.

The two sides of the movable frame (200) 200 are defined as a back side and a front side, where the solar panel 900 can be mounted on the front side of the movable frame (200) 200 to receive sunlight and generate electricity. The support assemblies 300 are installed on the back side of the movable frame (200) 200 to track the sun without interfering with the operation of the solar panel 900.

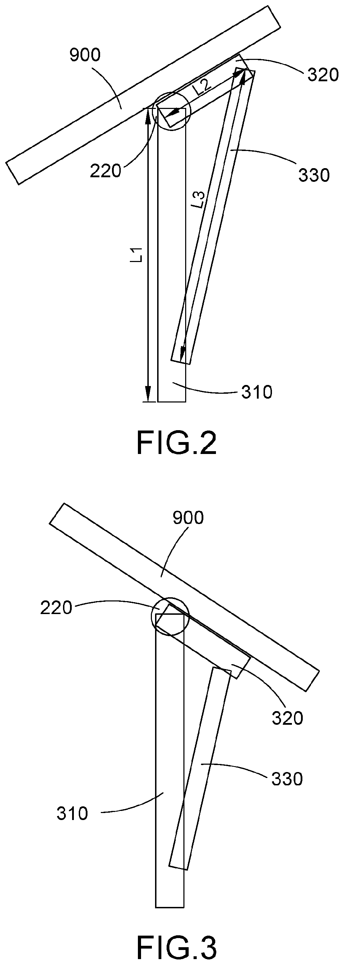

Referring to FIG. 2, wherein each support assembly 300 comprises a pier 310, a positioning seat 320, and a linear actuator 330. The pier 310 has a first length L1, the positioning seat 320 has a second length L2, and the linear actuator 330 has a third length L3; wherein the sum of any two of the first length L1, the second length L2, and the third length L3 is greater than the remaining one.

One end of the pier 310 is a ground base that is anchored to the ground, for example, but not limited to, using a screw stud to anchor the pier 310 to the ground at one end, and the other end is provided for installation of the movable frame (200) 200, allowing the movable frame (200) 200 to pivot relative to the pier 310 with the crossbar 220 as the axis, and multiple piers 310 may be used to pivot the movable frame (200) 200. In this embodiment, the other end of the pier 310 is fixed with a bearing 311, and the crossbar 220 of the movable frame (200) 200 passes through the bearing 311 and is coaxial with the bearing 311, allowing the movable frame (200) 200 to pivot relative to the pier 310 with the crossbar 220 as the axis. However, the present disclosure is not limited thereto.

The positioning seat 320 is fixed to the crossbar 220, specifically, the positioning seat 320 has a first end 321 and a second end 322. The positioning seat 320 is fixed to the crossbar 220 with the first end 321, and optionally, the second end 322 of the positioning seat 320 is also fixed to the movable frame (200) 200. In this embodiment, the first end 321 of the positioning seat 320 is fixed to the crossbar 220 by a coupling member 323. However, the present disclosure is not limited thereto, as long as the positioning seat 320 can drive the crossbar 220 to pivot relative to the pier 310 when moving, which is within the scope of this concept. For example, the first end 321 of the positioning seat 320 may also be fixed to the crossbar 220 by welding. In another embodiment, the first end 321 of the positioning seat 320 may be integrally formed with the crossbar 220. In yet another embodiment, the first end of the positioning seat 320 is shaped to match the crossbar 220, that is, the crossbar 220 may be a polygonal cylinder, such as a square cylinder, and the first end 321 of the positioning seat 320 has a shape that can tightly fit the square cylinder, such that when the positioning seat 320 moves, the tight fit between the positioning seat 320 and the crossbar 220 may drive the crossbar 220 to pivot relative to the pier 310.

One end of the linear actuator 330 is pivotally connected to the pier 310, and the other end is pivotally connected to the second end 322 of the positioning seat 320. The linear actuator 330 comprises a motor 331 and an extension member 332. When the linear actuator 330 is operated, the motor 331 drives the extension member 332 to extend or retract in one direction so that the lengths of the two ends of the linear actuator 330 can extend or retract, thereby causing the movable frame (200) 200 to pivot relative to the pier 310.

More specifically, with reference to FIGS. 2 and 3, the linear actuator 330 can be pivotally connected at one end to a fixed position on the pier 310, and the other end of the linear actuator 330 can be pivotally engaged with the second end 322 of the positioning seat 320 via one end of the motor 331. Thus, when the motor 331 is operated to extend the extension member 332, due to the fact that one end of the linear actuator 330 is pivoted at the fixed position on the pier 310, the other end of the linear actuator 330 will push the positioning seat 320, causing the positioning seat 320 to pivot relative to the movable frame (200) 200 (as shown in FIG. 2); conversely, when the motor 331 is operated to retract the extension member 332, due to the fact that one end of the linear actuator 330 is pivoted at the fixed position on the pier 310, the other end of the linear actuator 330 will pull the positioning seat 320, causing the positioning seat 320 to pivot in the opposite direction relative to the movable frame (200) 200 (as shown in FIG. 3). In this way, the angle of the movable frame (200) 200 can be changed together with the solar panel 900 to achieve the effect of tracking the sun.

Additionally, it should be noted that in the present disclosure, when the movable frame (200) 200 pivots relative to the pier 310 with the crossbar 220 as the axis, it pivots in only one direction. Therefore, in the present disclosure, the pier 310, the positioning seat 320, and the linear actuator 330 are designed to be coplanar. With this design, when the movable frame (200) 200 is pivoted relative to the pier 310 with the crossbar 220 as the axis, there is no other direction of rotation or deviation, which ensures better stability and achieves the sun tracking effect of the solar panel with a simplified structure. In other words, although the movable frame (200) 200 in the present disclosure can only change the angle in a single direction rather than in multiple axes, it can achieve the sun tracking effect of the solar panel with a simple and stable structure.

In addition, in an embodiment of the present disclosure, the solar racking system may include multiple reinforced bracket assemblies 350 to make the movable frame (200) 200 and the crossbar 220 more stable as a whole and to prevent damage from strong winds. More specifically, the reinforced bracket assembly 350 includes two fixed ends 351, and the reinforced bracket assembly 350 spans the crossbar 220 and can be deployed along the vertical bar 212. The reinforced bracket assembly 350 is fixed to the back side of the movable frame (200) 200, and is fixed to the vertical bar 212 by the two fixed ends 351. In the present disclosure, the number of reinforced bracket assemblies 350 is three, corresponding to the arrangement along the three vertical bars 212, but the present disclosure is not limited thereto, the number of reinforced bracket assemblies 350 may be increased or decreased according to actual needs. For example, if structural stability can be maintained, the number of reinforced bracket assemblies 350 may be less than the number of vertical bars 212, taking cost into consideration.

In addition, in the present disclosure, the reinforced bracket assembly 350 is fixed to the vertical bar 212 by the screw locking method, but the present disclosure is not limited thereto, the reinforced bracket assembly 350 may also be fixed to the vertical bar 212 by welding. A reinforcing component 352 is provided between the two fixed ends 351 of the reinforced bracket assembly 350. The reinforcing component 352 spans and is attached to the crossbar 220, and a portion of the two fixed ends 351 contacts and is fixed to the movable frame (200) 200. In the present disclosure, the two fixed ends 351 are fixed to the vertical bar 212 by a screw locking method, but the present disclosure is not limited thereto, the reinforcing component 352 may also be fixed to the vertical bar 212 by welding. In addition, the end of the two fixed ends 351 may be bent away from the movable frame (200) 200 to facilitate locking to the vertical bar 212, and when the reinforced bracket assembly 350 is installed, the bent end of the fixed ends 351 may also be an auxiliary positioning for locking. It is also worth mentioning that although the reinforcing component 352 is used to stabilize the crossbar 220 and the vertical bar 212 of the movable frame (200) 200, the reinforcing component 352 is not locked to the crossbar 220, but is fixed to the vertical bar 212. The reinforcing component 352 only spans and is attached to the crossbar 220, thereby providing stability while maintaining a simple structure.

In other embodiments of the present disclosure, the number of both the support assembly 300 and the reinforced bracket assembly 350 is one. By setting up the reinforced bracket assembly 350, the overall rigidity of the solar racking system can be increased and the movable frame (200) 200 can pivot smoothly to prevent the solar panel 900 from bending when the linear actuator 330 operates to pivot the movable frame (200) 200 relative to the pier 310. By setting up the reinforced bracket assembly 350, the number of linear actuators 330 can also be reduced to lower costs while maintaining the performance of the solar racking system and making the movable frame (200) 200 pivot smoothly.

Although the present disclosure has been disclosed in the foregoing embodiments, it is not intended to limit the present disclosure. Those skilled in the art and having ordinary skill will be able to make some modifications and improvements within the spirit and scope of the present disclosure without departing from the spirit and scope of the present disclosure as defined by the appended claims.

## Claims

1. A solar racking system, comprising:
a pier (310);
a movable frame (200) including a crossbar (220), pivotally mounted on the pier (310) using the crossbar (220) as an axis, **characterized in that**:
a reinforcing bracket assembly (350) spanning the crossbar (220) and mounted to the crossbar (220) with two fixed ends (351) fixed to a back side of the movable frame (200);
a positioning seat (320) having a first end (321) and a second end (322) and fixed to the crossbar (220) at the first end (321); and
a linear actuator (330) pivotally connected at one end to the pier (310), and at the other end to the second end (322) of the positioning seat (320);
wherein, the linear actuator (330) comprises a motor (331) and an extension member (332), and when the linear actuator (330) is operated, the motor (331) drives the extension member (332) to extend or retract in one direction so that the length of the two ends of the linear actuator (330) extends or retracts, thereby allowing the movable frame (200) to pivot relative to the pier (310).

2. The solar racking system according to claims 1 or 2, wherein the second end (322) of the positioning seat (320) is fixed to the movable frame (200).

3. The solar racking system according to any one of above claims, wherein the crossbar (220) is a polygonal cylinder, and the first end (321) of the positioning seat (320) is shaped to match the crossbar (220).

4. The solar racking system according to any one of above claims, wherein the pier (310), the positioning seat (320), and the linear actuator (330) are coplanar.

5. The solar racking system according to any one of above claims, wherein the two sides of the movable frame (200) are defined as the back side and a front side, the crossbar (220), the pier (310), the positioning seat (320), and the linear actuator (330) are all located on the back side.

6. The solar racking system according to any one of above claims, wherein between the two fixed ends (351) of the reinforced bracket assembly, a reinforcing component (352) spans and is attached to the crossbar (220), and a portion of the two fixed ends (351) contacts and is fixed to the movable frame (200), with the end of the two fixed ends (351) being bent away from the movable frame (200).

7. The solar racking system according to any one of above claims, wherein the pier (310) has a first length, the positioning seat (320) has a second length, and the linear actuator (330) has a third length, and the sum of any two of the first length, the second length, and the third length is greater than the remaining one.

8. The solar racking system according to any one of above claims, wherein the pier (310) includes a bearing (311), and the crossbar (220) passes through the bearing (311) to allow the movable frame (200) to pivot relative to the pier (310).

9. A solar racking system, comprising:
a movable frame (200) including a crossbar (220); and
at least one support assembly (300) including a positioning seat (320) having a first end (321) and a second end (322) and fixed to the crossbar (220) at the first end (321), **characterized in that**:
a reinforcing bracket assembly (350) spanning the crossbar (220), with two fixed ends (351) fixed to the back side of the movable frame (200);
wherein, the at least one support assembly (300) comprises a pier (310) and a linear actuator (330),
wherein, one end of the pier (310) has a bearing (311), and the crossbar (220) of the movable frame (200) passing through the bearing (311), allowing the movable frame (200) to pivot relative to the pier (310) using the crossbar (220) as an axis;
and
wherein, the linear actuator (330) is pivotally connected at one end to the pier (310) and at the other end to the second end (322) of the positioning seat (320), when the linear actuator (330) is operated, the length of the two ends of the linear actuator (330) extends or retracts, thereby allowing the movable frame (200) to pivot relative to the pier (310).
